# NEUE EUROPÄISCHE PATENTSCHRIFT

(11) **EP 2 330 471 B2**
(45) Veröffentlichungstag und Bekanntmachung des Hinweises auf die Entscheidung über den Einspruch: **04.09.2019**
(45) Hinweis auf die Patenterteilung: 28.10.2015
(21) Anmeldenummer: 10190305.2
(22) Anmeldetag: 08.11.2010
(51) Int. Cl.: G05D 1/00, G05D 1/02, G08G 1/123, A47L 9/00

(54) **Verfahren zur Steuerung eines Roboters**
Method for controlling a robot
Procédé destiné à la commande d'un robot

(30) Priorität: 10.11.2009 DE 102009052629
(43) Veröffentlichungstag der Anmeldung: 08.06.2011
(73) Patentinhaber: Vorwerk & Co. Interholding GmbH, 42275 Wuppertal (DE)
(72) Erfinder: Kemker, Uwe, 42105 Wuppertal (DE); Schlischka, Patrick, 42349 Wuppertal (DE); Wallmeyer, Mario, 40219 Düsseldorf (DE)
(74) Vertreter: Müller, Enno

(56) Entgegenhaltungen:
- EP-A1- 1 804 149
- WO-A1-01/37060
- US-A1- 2002 153 184
- US-A1- 2002 153 855
- US-A1- 2005 204 505
- US-A1- 2005 273 967

## Beschreibung

Die Erfindung betrifft ein Verfahren zur Steuerung eines Roboters nach den Merkmalen des Oberbegriffes des Anspruches 1.

Verfahren der in Rede stehenden Art zur Steuerung eines autonom arbeitenden Roboters, insbesondere eines autonom arbeitenden Kehr- und/oder Saugroboters insbesondere für den Haushaltsbereich, sind bekannt. Der bevorzugt akkubetriebene Roboter weist im Falle der Ausgestaltung eines Reinigungsroboters für den Haushaltsbereich einen internen Speicher auf, in welchem eine Karte eines oder mehrerer Räume angelegt werden kann, anhand welcher Karte eine gezielte Bodenreinigung in dem angefahrenen Raum erreicht werden kann. In der Karte sind die Raumbegrenzungen und ggf. etwaige Hindernisse in dem Raum abgelegt, so dass anhand der vorliegenden Karte eine günstige Verfahrstrategie des Roboters, beispielsweise zum Abreinigen des Bodens in dem Raum, erreicht wird. Die Karte der Umgebung kann zufolge entsprechender Einrichtungen durch selbsttätiges Erfassen einer Räumlichkeit selbst angelegt sein. Alternativ oder auch kombinativ hierzu sind Lösungen bekannt, bei welchen die Karte der Umgebung in den Speicher des Roboters übertragen wird. Weiter ist bekannt, dem Roboter ein Außengerät zur Steuerung desselben zuzuordnen, beispielsweise in Form einer Fernbedienung, welches Außengerät über entsprechende Steuerungsbefehle geeignet ist, den Roboter im Rahmen eines sogenannten Teach-in-Verfahrens einen Verfahrweg und/oder Raumbegrenzungen zu vermitteln, welche in der Karte abgelegt werden. Es sind diesbezüglich Außengeräte in Form von Fernbedienungen bekannt, weiter beispielsweise in Form von Ultraschall- oder Infrarot-Fernbedienungen, über welche unterschiedliche Funktionen des Roboters ausgelöst werden können. In diesem Zusammenhang ist es weiter bekannt, dass eine bidirektionale Kommunikation zwischen dem Roboter und dem Außengerät vorgesehen ist. Des Weiteren ist es bekannt, dass eine Karte der Umgebung auf dem Außengerät erstellt wird und die so erstellte Karte an den Roboter übertragen wird.

Aus der JP-A-2007-226322 ist es bekannt, ein selbstständig verfahrbares Kehr-/Sauggerät so auszubilden, dass eine von diesem selbst erstellte Karte auf ein Außengerät übertragen wird. Der Nutzer kann in die so übertragene Karte einen Verfahrweg, den der Roboter nehmen soll, eintragen und diesen Verfahrweg dann zur Durchführung an den Roboter übertragen.

Die Veröffentlichung EP 1804149 A1 offenbart des Weiteren einen mobilen Roboter sowie ein Verfahren zur Kartenerstellung. Der Roboter kann innerhalb eines Installationsmodus Repräsentationen von detektierten Objekten abspeichern, um eine Umgebungskarte zur erstellen. Der mobile Roboter kann des Weiteren innerhalb eines Arbeitsmodus anhand der während des Installationsmodus erstellten Umgebungskarte innerhalb der Umgebung umherfahren. Der Roboter weist des Weiteren Bearbeitungsmittel zum Bearbeiten der gespeicherten Umgebungskarte während des Installationsmodus auf. Die Bearbeitung der Umgebungskarte erfolgt manuell durch einen Nutzer mittels eines Eingabemittels.

Ausgehend von dem genannten Stand der Technik beschäftigt sich die Erfindung mit der Aufgabenstellung, eine vorteilhaft günstige Einwirkungsmöglichkeit auf den Roboter zu erreichen.

Diese Aufgabe ist beim Gegenstand des Anspruches 1 gelöst, wobei darauf abgestellt ist, dass das Außengerät die Karte zufolge Abscannen durch Entfernungsmessung von Räumlichkeiten mittels des Außengerätes erstellt und/oder eine bereits erstellte und in dem Roboter abgelegte Karte mittels des Außengerätes überarbeitet wird, derart, dass eine von dem Roboter an das Außengerät übermittelte Karte zufolge Benutzereingriff mittels des Außengerätes durch Hinzunahme weiterer Räumlichkeiten und/oder durch Änderung einer oder mehrerer Raumabmessungen aktualisiert wird.

Die Erstellung der Karte auf dem Außengerät ist auch zur Nutzung bei einem Roboter geeignet, der nicht zur selbstständigen Erstellung einer Karte der abzufahrenden und ggf. zu reinigenden Räumlichkeiten bzw. Flächen ausgebildet ist. Das Außengerät schafft die Möglichkeit, eine derartige Karte zu erstellen, welche bspw. händisch anhand von Koordinaten eingegeben wird, weiter bspw. zufolge Abscannen durch Entfernungsmessungen der Räumlichkeiten mittels des Außengerätes. Auch ist ein solches Verfahren geeignet, um eine in dem Roboter abgelegte Karte mittels des Außengerätes zu aktualisieren bzw. die abgelegten Kartendaten zu überschreiben. Auch kann eine bereits erstellte und in dem Roboter abgelegte Karte mittels des Außengerätes überarbeitet werden, bspw. derart, dass eine von dem Roboter an das Außengerät übermittelte Karte zufolge Benutzereingriff mittels des Außengerätes bspw. durch Hinzunahme weiterer Räumlichkeiten und/oder durch Änderung einer oder mehrerer Raumabmessungen aktualisiert wird.

Das Außengerät kann Befehlstasten oder dergleichen aufweisen, bspw. in Form von Richtungstasten zur Steuerung des Roboters hinsichtlich seiner Verfahrrichtung. Über das Außengerät ist weiter bevorzugt eine Teach-in-Programmierung zur Erstellung einer Raumkarte durchführbar. Weiter besteht hierdurch die vorteilhafte Möglichkeit, den Roboter mittels Navigation zu einer bestimmten Position auf der Karte zu verbringen.

Die Position des Roboters kann innerhalb der Karte angezeigt werden. Die Handhabung bzw. Bedienung des Roboters ist vereinfacht. Dem Benutzer werden zufolge einer Übertragung der in dem Roboter abgelegten Karte auf das Außengerät sowie der Übertragung der Position des Roboters innerhalb der Karte ggf. für den weiteren Verfahrweg, im Falle eines Reinigungsroboters für den weiteren Reinigungsvorgang, relevante Positionsdaten vermittelt Dem Benutzer ist hierdurch ermöglicht, anhand der übermittelten Positionsdaten ggf. einzuschreiten, bspw. zufolge entsprechender Steuerung über das Außengerät. Zudem ist in einfachster Weise hierdurch das Auffinden des Roboters, insbesondere in größeren, unübersichtlichen Räumlichkeiten erleichtert. Die Positionsanzeige auf dem Außengerät ist in einfachster Ausgestaltung erreicht durch Angabe einer bspw. einem Raum zugeordneten Kennung, weiter bspw. zufolge Aktivierung einer, einem Raum oder einem Raumabschnitt zugeordneten Leuchte oder dergleichen an dem Außengerät Der Roboter sowie das Außengerät verfügen hierzu über eine geeignete, bevorzugt standardisierte Schnittstelle, über welche das Außengerät mit dem Roboter verbunden ist und über welche der Roboter mit dem Außengerät und umgekehrt kommunizieren kann. Durch die Nutzung einer standardisierten Schnittstelle ist in weiterer Ausgestaltung die Möglichkeit gegeben, dass der Benutzer in vorteilhafter Weise auch auf andere Geräte über das Außengerät einwirken kann bzw. verschiedene, bspw. im Haushalt verfügbare Geräte mittels des Außengerätes nutzen kann. In weiter bevorzugter Ausgestaltung ist der Roboter ein Kehr- und/ oder Saugroboter, so weiter insbesondere in einer Ausgestaltung gemäß der DE 10 2005 046 639 A1 und/oder DE 103 57 635 A1 und/oder DE 102 42 257 A1 und/oder DE 103 57 37 A1. Derartig selbsttätig auf einem Boden verfahrbare Geräte dienen zur Absaugung und/ oder zum Abkehren von Bodenbelägen, welche bspw. mittels einer Fernbedienung zu einem Raum bewegt werden, um dort selbsttätig ein Reinigungsprogramm abzuarbeiten. Hierzu weist sowohl der Roboter als auch das Außengerät bevorzugt eine Sende- und Empfangseinheit auf, demzufolge sowohl das Außengerät, bevorzugt die Fernbedienung, als auch der Roboter ausgebildet sind sowohl zum Senden als auch zum Empfangen von Signalen, so dass entsprechend eine bidirektionale Kommunikation zwischen Außengerät und Roboter erreicht ist. Der Roboter kann auch ein selbsttätig verfahrbares Gerät sein, das bspw. zum Transport von Gegenständen ausgelegt ist.

Weitere Merkmale der Erfindung sind nachstehend, auch in der Figurenbeschreibung, oftmals in ihrer bevorzugten Zuordnung zum Gegenstand des Anspruches 1 oder zu Merkmalen weiterer Ansprüche erläutert. Sie können aber auch in einer Zuordnung zu nur einzelnen Merkmalen des Anspruches 1 oder des jeweiligen weiteren Anspruches oder jeweils unabhängig von Bedeutung sein.

Es kann vorgesehen sein, dass das Außengerät einen Bildschirm zur Anzeige der Karte aufweist. Hierbei handelt es sich in bevorzugter Ausgestaltung um einen LCD-Bildschirm (Liquid Crystal Display) oder alternativ um einen TFT-Bildschirm (Thin Film Transistor Display). In weiterer Ausgestaltung findet ein Kathodenstrahlröhrenbildschirm Verwendung. Zufolge der Ausgestaltung des Außengerätes mit einem Bildschirm ist die vom Roboter an das Außengerät übermittelte Karte und die hierdurch stilisierten Räumlichkeiten, in welchen sich der Roboter bewegt bzw, bewegen soll, für den Benutzer leicht erkennbar. Insbesondere bei der weiteren Übermittlung der Position des Roboters innerhalb der Karte ist für den Benutzer diese Information leicht auf die Räumlichkeiten übertragbar. Hierbei können weiter die Informationen über die Roboterposition innerhalb der Karte bzw. innerhalb der Räumlichkeiten in Echtzeit übertragen werden, so dass in bevorzugter Ausgestaltung die Bewegung bzw. das Verfahren des Roboters innerhalb der Räumlichkeiten auf dem Bildschirm des Außengerätes verfolgt werden kann, dies in vorteilhafter Weise auch dann, wenn kein unmittelbarer Sichtkontakt zum Roboter vorliegt. Dem Benutzer ist so die Möglichkeit gegeben, von einem Ort aus (innerhalb oder auch alternativ außerhalb der von dem Roboter zu befahrenden Räumlichkeiten) die Verfahrbewegungen des Roboters zu kontrollieren.

Zur weiteren Vereinfachung und Verbesserung der Steuerung und Bedienung des Roboters ist vorgesehen, dass der Benutzer umfangreich über den Status des Roboters informiert wird. Hierzu dient zugleich das mit dem Roboter kommunizierende Außengerät. So ist in diesem Zusammenhang weiter vorgeschlagen, dass die Betriebsstunden und/oder die gefahrene, gereinigte Fläche in Bezug auf die gespeicherte Karte in dem Roboter in Form von Daten gespeichert werden und dass die modifizierte Kartendarstellung auf das Außengerät übertragbar und dort anzeigbar ist. Die gefahrene Strecke und/ oder die abgefahrene und zugleich gereinigte Fläche innerhalb der gespeicherten Karte wird bevorzugt hierzu zunächst im Roboter in Form von Wege-/Flächendaten (X-und Y-Koordinaten) abgelegt. Mit Übermittlung der Karte an das Außengerät erscheint bevorzugt auf dem Bildschirm des Außengerätes eine modifizierte Karte, in welcher bspw. die gereinigten Flächen bzw. Strecken farblich oder durch Schattierungen bzw. Schraffierungen hervorgehoben sind. Die Übermittlung der Daten kann hierbei in zeitlichen Abständen, weiter ggf. in Echtzeit, weiter alternativ zufolge Abrufens über das Außengerät angezeigt werden. Der Benutzer erhält entsprechend eine konkrete Aussage über den Status des zurzeit ablaufenden Reinigungsprogramms. Weiter erhält dieser bevorzugt auch Informationen über die Betriebsstunden des Roboters, bspw. Betriebsstunden seit Beginn des aktuell durchgeführten Reinigungsprogramms, weiter ggf. zusätzlich oder auch alternativ hierzu die Betriebsstunden seit einem letzten Reset bzw. seit der ersten Inbetriebnahme des Roboters durch den Benutzer. Beispielsweise kann hierüber direkt oder auch indirekt eine Information darüber gegeben werden, wann der Roboter bspw. einer nächsten Sichtkontrolle oder dergleichen zugeführt werden muss. Zudem ist bevorzugt, dass zusätzlich oder alternativ interne Statistiken des Roboters auf das Anzeigegerät übertragen und dort angezeigt werden, so weiter bspw. der derzeitige Ladezustand der bevorzugt im Roboter vorgesehenen Akkumulatoren, weiter alternativ oder kombinativ den Füllstand des Schmutzbehälters bzw. eines in dem Roboter vorgesehenen Staubfilterbeutels.

In weiterer Ausgestaltung ist über das Außengerät eine Reinigungsstatistik anzeigbar, welche sich bspw. auf den momentanen Reinigungsvorgang bezieht, alternativ auf mehrere Reinigungsvorgänge bezogen auf die letzten Tage, Wochen oder Monate. So sind bspw. Statistiken über das Außengerät abrufbar bzw. auf diesem anzeigbar, welche Informationen darüber vermitteln, welcher Raum wann und ggf. in welcher Intensität abgereinigt wurde. So ist weiter bspw. ein Protokoll abrufbar und auf dem Außengerät bevorzugt auf einem Bildschirm anzeigbar, so weiter bspw. eine Anzeige des geplanten bzw. derzeit durchgeführten Reinigungsablaufes des Roboters, so dass dem Benutzer Informationen darüber gegeben werden, welche Räume bereits abgereinigt wurden und welche Räume, weiter bevorzugt in welcher Reihenfolge und zeitlichen Abständen folgen.

In weiterer Ausgestaltung ist vorgesehen, dass auf dem Außengerät eine Karte erstellt werden kann und dass die so erstellte Karte an den Roboter übertragen werden kann. Zufolge dieser Ausgestaltung ist das Verfahren auch nutzbar bei einem Roboter, der nicht ausgebildet ist zur selbstständigen Erstellung einer Karte der abzufahrenden und ggf. zu reinigenden Räumlichkeiten bzw. Flächen. Vielmehr ist vorgesehen, dass das Außengerät die Möglichkeit bietet, eine derartige Karte zu erstellen, welche bspw. handisch anhand von Koordinaten eingegeben werden, weiter bspw. zufolge Abscannen durch Entfernungsmessungen der Räumlichkeiten mittels des Außengerätes. Auch ist ein solches Verfahren geeignet, um eine in dem Roboter abgelegte Karte mittels des Außengerätes zu aktualisieren bzw. die abgelegten Kartendaten zu überschreiben. Auch kann eine bereits erstellte und in dem Roboter abgelegte Karte mittels des Außengerätes überarbeitet werden, bspw. derart, dass eine von dem Roboter an das Außengerät übermittelte Karte zufolge Benutzereingriff mittels des Außengerätes bspw. durch Hinzunahme weiterer Räumlichkeiten und/oder durch Änderung einer oder mehrerer Raumabmessungen aktualisiert wird.

In vorteilhafter Weise ist weiter vorgesehen, dass mittels des Außengerätes der Roboter hinsichtlich seines Verfahrweges und/oder Reinigungsablaufes gesteuert werden kann. Entsprechend weist das Außengerät diesbezügliche Befehlstasten oder dergleichen auf, weiter bspw. in Form von Richtungstasten zur Steuerung des Roboters hinsichtlich seiner Verfahrrichtung. Entsprechend ist über das Außengerät weiter bevorzugt auch eine Teach-in-Programmierung zur Erstellung einer Raumkarte durchführbar. Weiter besteht hierdurch die vorteilhafte Möglichkeit, den Roboter mittels Navigation zu einer bestimmten Position auf der Karte zu verbringen.

Mittels des Außengerätes sind bevorzugt auch zu reinigende Räume und/ oder Teilbereiche der Räume anwählbar, dies weiter bevorzugt unter Nutzung der von dem Roboter an das Außengerät übertragenen Karte. Bei Ausbildung des Außengerätes mit einem Bildschirm wird hierzu bevorzugt ein bestimmter Bereich in der Karte zufolge eines Steuerbefehls ausgewählt, welche Karteninformation hiernach an den Roboter geschickt wird. Auch ist über das Außengerät eine Zeitprogrammierung des Roboters bevorzugt festlegbar, so bspw. den bestimmten Zeitpunkt, den bestimmten Tag, insbesondere Wochentag, oder darüber hinaus auch ein konkretes Datum, an welchem der Roboter seine ihm zugeteilte Arbeit durchführen soll. Zudem ist über das Außengerät auch, insbesondere bei Ausgestaltung desselben mit einem Bildschirm, eine Fehleranzeige ermöglicht. Etwaige Störungen können entsprechend vom Roboter an das Außengerät übertragen werden, so dass dem Benutzer eine bevorzugt visuelle Information vorliegt. In weiterer Ausgestaltung werden derartige Fehlermeldungen selbsttätig an einen Kundendienst oder dergleichen übermittelt, so dass ein zeitnaher Service zur Störungsbehebung erfolgen kann.

Das Außengerät ist in einer Ausgestaltung als nicht mobil ausgelegtes Gerät ausgebildet, so bspw. zur stehenden oder liegenden Anordnung auf einer Fläche, wie bspw. Tischfläche oder Bodenfläche. So ist das Außengerät weiter bspw. eine stationäre Einheit des Roboters, welche von letzterem bspw. zur Wiederaufladung der roboterseitigen Akkumulatoren bevorzugt selbsttätig angefahren wird und so entsprechend eine Parkstellung für den Roboter zwischen den Reinigungsvorgängen bietet. In weiter bevorzugter Ausgestaltung ist das Außengerät tragbar, bevorzugt als handliches mobiles Gerät ausgebildet, weiter bevorzugt auch dazu geeignet, dieses durch die Räumlichkeiten und ggf. darüber hinaus auch außerhalb der vom Roboter zu befahrenden und ggf. zu reinigenden Räumlichkeiten durch den Benutzer mitgenommen zu werden. Bevorzugt sind diesbezüglich mobile Geräte, die durch den Benutzer einhändig getragen werden können, was die Benutzung mittels der freien Hand erleichtert. Auch ohne Probleme zweihändig zu tragende Geräte, die ggf. zur Dateneingabe bspw. zur Steuerung des Roboters auf einer Fläche, bspw. Tischfläche, abgestellt werden, sind im Sinne der Erfindung tragbare, mobile Geräte. In diesem Zusammenhang ist weiter bevorzugt, dass das Außengerät kein gesondertes, auf den Roboter abgestimmtes Gerät ist, sondern vielmehr ein Gerät, welches insbesondere im Haushaltsbereich vorliegt, weiter insbesondere im täglichen Ablauf des Benutzers auch für weitere Zwecke genutzt wird.

So ist weiter bevorzugt, dass das Außengerät ein Telefon ist, weiter bevorzugt ein digitales Telefon. Hierbei kann es sich um ein Festnetztelefon handeln, weiter sowohl um ein schnurgebundenes und entsprechend nicht mobiles Telefon als auch um ein sog. Funktelefon. Weiter bevorzugt ist das Außengerät ein Mobiltelefon, insbesondere ein gängiges Mobiltelefon mit Bildschirm.

In alternativer Ausgestaltung ist das Außengerät ein Computer, bevorzugt ein Tischgerät in Form eines Personal Computers, weiter ein mobiles Gerät in Form eines Notebooks, Desknotes oder Netbooks. Weiter alternativ ist das Außengerät ein PDA (Personal Digital Assistant). Derartige Computer sind in bekannter Weise mit einem Bildschirm versehen, auf welchem bspw. die vom Roboter übermittelte Karte, weiter ggf. die gefahrene und gereinigte Fläche, dargestellt werden kann. Über die weiter vorgesehene Tastatur sind dem Roboter Befehle übermittelbar und/oder ist die auf dem Bildschirm angezeigte Karte oder weiter alternativ der vom Roboter vorgeschlagene Verfahrweg änderbar oder vorgebbar. Zur Steuerung des Roboters ist das Außengerät mit einer angepassten Software versehen. Alternativ kann auch vorhandene Software genutzt werden, so weiter bspw. im Zusammenhang mit einem Computer ein auf diesem installierter Internetbrowser.

In weiterer Ausgestaltung ist das Außengerät ein Audioabspielgerät, wie bspw. ein MP3-Player, weiter bevorzugt ein Portable Media Player, welcher geeignet ist, auch Video oder Bilder anzuzeigen.

In vorteilhafter Weise können zugeordnet einem Roboter auch mehrere Außengeräte vorgesehen sein, so bspw. zur wahlweisen Steuerung des Roboters über einen nicht mobilen Personal Computer und über ein Mobiltelefon.

Als besonders vorteilhaft erweist sich eine Weiterbildung, bei welcher die Anzeige des Außengerätes als Touch-Screen ausgebildet ist. Hierbei handelt es sich um einen Sensorbildschirm, bei welchem durch Berührung von Teilen eines auf dem Bildschirm angezeigten Bildes der Programmablauf im Gerät (bspw. Computer oder PDA) direkt gesteuert werden kann. Bevorzugt erfolgt hierbei die Steuerung mittels Fingerberührung des Bildschirmes oder alternativ mittels eines Zeige- oder Eingabestiftes (Stylus oder Touchpen). Hierdurch ist dem Benutzer ein Hilfsmittel gegeben, welches erlaubt, unmittelbar mit der auf dem Bildschirm angezeigten Karte zu arbeiten. Es bedarf keiner umständlichen Eingabe von bspw. X- und Y-Koordinaten über eine Tastatur oder dergleichen, um bspw. den Roboter zu bewegen oder ihm einen Raum anzugeben, den er anfahren soll. Vielmehr kann bspw. mittels Fingerdruck auf den Bildschirm dem Roboter unmittelbar gezeigt werden, wo er bspw. hinfahren und von dort an abreinigen soll. Auch können über einen solchen Touch-Screen gezielte Befehle erteilt werden, wozu entsprechende Bereiche des Bildschirmes, die in Wort oder Bild die Befehle darstellen, zufolge Drücken angewählt werden.

Die Datenübertragung zwischen Roboter und Außengerät bzw. Außengerät und Roboter erfolgt in bevorzugter Ausgestaltung drahtlos, was die Mobilität des Roboters weiter erhöht. So ist weiter in diesem Zusammenhang eine direkte drahtlose Übertragung bevorzugt, d.h. ohne weitere Zwischenschaltung von Übertragern und/oder Verteilern.

So erfolgt weiter bevorzugt die Datenübertragung mittels WLAN (Wireless Local Area Network). Hierbei handelt es sich um ein lokales Funknetz nach Funknetz-Standard IEEE 802.11, wobei Datenübertragungsraten von 2 bis 300 Mbit/ s, bevorzugt 20 bis 60 Mbit/s erreicht werden. In alternativer Ausgestaltung erfolgt die Datenübertragung mittels WPAN (Wireless Personal Area Network). Hierbei handelt es sich um ein lokales Funknetz nach Funknetz-Standard IEEE 802.15.1 (Bluetooth) oder 802.15.4 (ZigBee), wobei dieser offene Funknetz-Standard es ermöglicht, u.a. Haushaltsgeräte auf Kurzstrecken von 0,2 bis 100 m (Bluetooth bevorzugt bis 50 m, ZigBee bevorzugt bis 100 m) mit bspw. einer Fernbedienung zu verbinden. Die Datenübertragungsrate liegt bei Bluetooth bei bis zu 3 Mbit/s. ZigBee weist eine demgegenüber kleinere Datenrate auf.

WLAN weist gegenüber WPAN eine größere Sendeleistung und eine größere Reichweite, sowie in der Regel auch eine höhere Datenübertragungsrate auf. Vorteil des WPAN ist zufolge der geringeren Sendeleistung eine entsprechend geringere Beanspruchung der bevorzugten im Roboter, weiter ggf. auch der in dem Außengerät vorgesehenen Akkumulatoren.

Nachstehend ist die Erfindung anhand der beigefügten Zeichnung, welche lediglich ein Ausführungsbeispiel darstellt, näher erläutert. Es zeigt:
- Fig. 1: in schematischer Darstellung einen Roboter in Form eines selbsttätig verfahrbaren Kehr- und/oder Saugroboters und eine Mehrzahl von dem Roboter zugeordneten Außengeräten zur Kommunikation mit dem Roboter;
- Fig. 2: in schematischer Grundrissdarstellung eine durch den Roboter zu befahrende und flächenmäßig abzureinigende Wohnung mit mehreren Räumen;
- Fig. 3: in Ansicht ein Außengerät mit einer durch den Roboter an das Außengerät übermittelten, auf einem Bildschirm angezeigten Karte gemäß dem Wohnungsgrundriss in Fig. 2;
- Fig. 4: eine der Fig. 3 entsprechende Darstellung des Außengerätes, jedoch bei Anzeige von, von dem Roboter an das Außengerät übermittelten Statistikwerten auf dem Bildschirm.

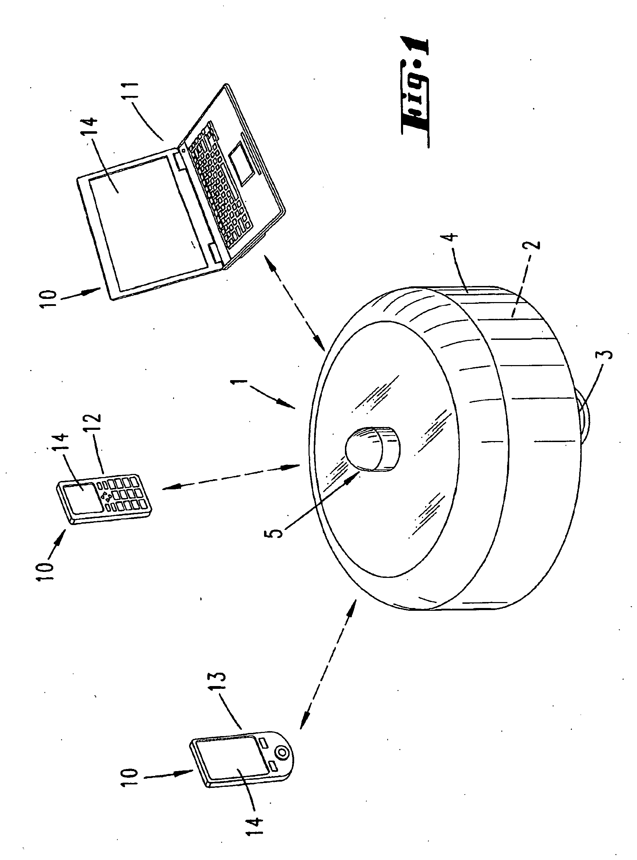

Dargestellt und beschrieben ist zunächst mit Bezug zu Fig. 1 ein Roboter 1 in Form eines selbsttätig verfahrbaren Kehr- und/oder Saugroboters, mit einem Chassis 2, welches unterseitig, dem zu pflegenden Boden zugewandt, elektromotorisch angetriebene Verfahrräder 3 sowie eine über die Unterkante des Chassisbodens 4 hinausragende, nicht dargestellte, gleichfalls elektromotorisch angetriebene Bürste trägt. Darüber hinaus dient das Chassis 2 zur Aufnahme eines nicht dargestellten Staubsammelbehälters sowie eines weiter nicht dargestellten Akkumulators zum Antrieb der Verfahrräder 3 sowie der Bürste. Weiter wird über den Akkumulator auch eine in den Roboter 1 integrierte Steuerungs- und Übertragungselektronik versorgt.

Das Chassis 2 ist überfangen von einer Gerätehaube 4, wobei der Roboter bevorzugt einen kreisförmigen Grundriss aufweist.

Weiter ist in der dargestellten Ausführungsform der Roboter 1 bevorzugt mit einem Sensormittel 5 zur Hinderniserkennung versehen. Hierbei kann es sich um Abstandssensoren, bspw. Ultraschall- oder Infrarotsensoren handeln, weiter auch um eine stoßsensitive Hinderniserkennung, bspw. gemäß der Ausführung in der DE 103 57 636 A1. Der Inhalt dieser Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen. Zufolge der sensormäßigen Abtastung der Roboterumgebung kann eine neue Umgebungskarte erstellt bzw. eine bereits erstellte Umgebungskarte durch Hinzunahme zuvor nicht registrierter Hindernisse bzw. geänderter Raumgrenzen bzw. durch Entnahme zuvor registrierter Hindernisse überarbeitet werden. Dargestellt ist ein um die Vertikalachse des Saugroboters im Betrieb desselben stetig umlaufendes Sensormittel 5 zur Rundum-Erfassung infolge einer Abstandsermittlung.

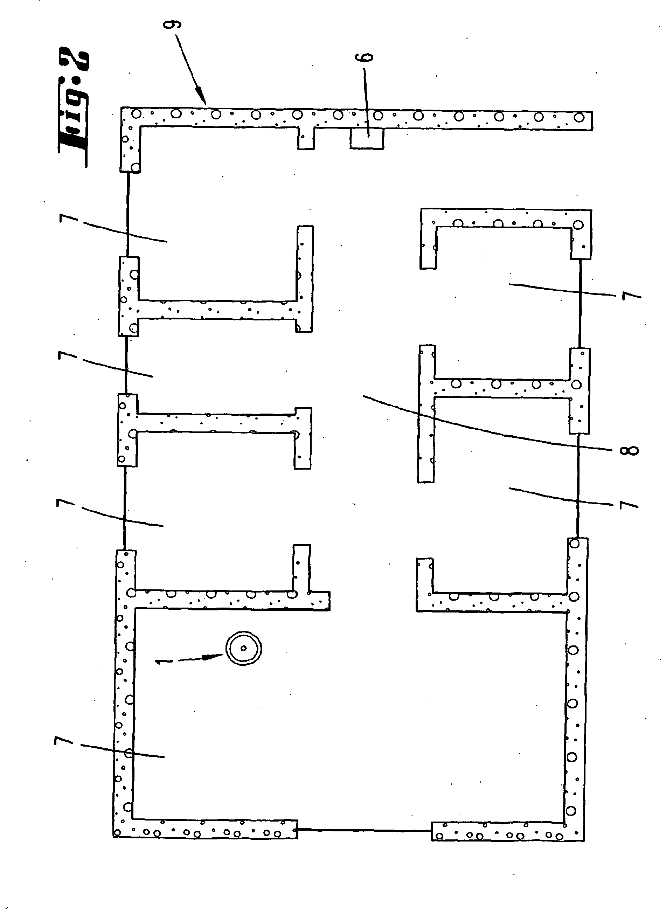

Zugeordnet dem Roboter 1 ist weiter bevorzugt, wie in Fig. 2 schematisch dargestellt, eine Basisstation 6 vorgesehen. Diese ist in der Regel Ausgangspunkt für die vom Roboter 1 durchzuführenden Reinigungsvorgänge und dient darüber hinaus der Aufladung des roboterseitigen Akkumulators, ggf. auch der Entleerung des roboterseitigen Staubaufnahmebehältnisses.

In Fig. 2 ist ein schematischer Grundriss einer Wohnung mit mehreren Räumen 7 dargestellt. Alle Räume 7 sind über einen langgestreckten Flur 8 zugänglich. Die Basisstation 6 ist in dem Flur 8 positioniert.

In dem Roboter 1 ist in einem nicht flüchtigen Speicher eine elektronisch erstellte Karte 9 der Umgebung abgelegt. Diese wurde bspw. durch entsprechendes Abfahren der betreffenden Räume 7 und 8 unter Berücksichtigung vorliegender Hindernisse, wie bspw. Schränke, selbsttätig angefertigt oder mittels eines Teach-in-Verfahrens unter Zuhilfenahme eines Außengerätes 10 erstellt.

Anhand der Karte 9 ist beispielsweise auf ein vorbestimmtes Signal hin, weiter bspw. ausgelöst über das Außengerät 10, das gezielte Anfahren eines Raumes 7 oder 8 ermöglicht, woraufhin dann die Bodenreinigung in dem angefahrenen Raum erfolgt.

Bezüglich der selbsttätigen Kartenerstellung des Roboters 1 zufolge Abfahren der betreffenden Räume und/oder zufolge eines Teach-in-Verfahrens unter Zuhilfenahme eines Außengerätes 10 wird auf die DE 10 2009 041 362 A1 verwiesen. Der Inhalt dieser Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen.

In Fig. 1 sind schematisch mehrere, ggf. alternative Außengeräte 10 dargestellt, die zur bidirektionalen Kommunikation mit dem Roboter 1 ausgelegt sind. Dargestellt sind diesbezüglich als Außengeräte 10 ein Notebook 11, ein Mobiltelefon 12 sowie ein PDA (Personal Digital Assistant) 13. Auch weitere alternative Außengeräte 10 sind diesbezüglich möglich, wie bspw. ein Festnetztelefon, ein nicht mobiler Personal Computer, ein Desknote, ein Netbook oder auch ein Audioabspielgerät wie bspw. ein Portable Media Player.

Dem Roboter 1 ist mindestens ein Außengerät 10 zugeordnet, ggf. auch mehrere, wahlweise einzusetzende Außengeräte 10, wobei weiter alle vorgeschlagenen Außengeräte 10 einen Bildschirm 14, bevorzugt in Form eines LCD- oder TFT-Bildschirms aufweisen.

Die weiteren Ausführungen betreffen ein Ausgabegerät 10 in Form eines PDA 13. Die weiter beschriebenen Funktionen und Bedienmöglichkeiten sind jedoch auch übertragbar auf die weiter vorgestellten Außengeräte 10.

Der Bildschirm 14 ist bevorzugt als Touch-Screen ausgebildet, so dass durch Berühren von Teilen eines auf dem Bildschirm 14 angezeigten Bildes ein Programmablauf in dem Außengerät 10 - hier in dem PDA 13 - direkt gesteuert werden kann.

Die bidirektionale Datenübertragung zwischen Außengerät 10 und Roboter 1 erfolgt drahtlos bevorzugt mittels Funkübertragung, weiter bevorzugt mittels WLAN oder WPAN, wozu sowohl der Roboter 1 als auch das Außengerät 10 mit einer geeigneten standardisierten Schnittstelle versehen sind.

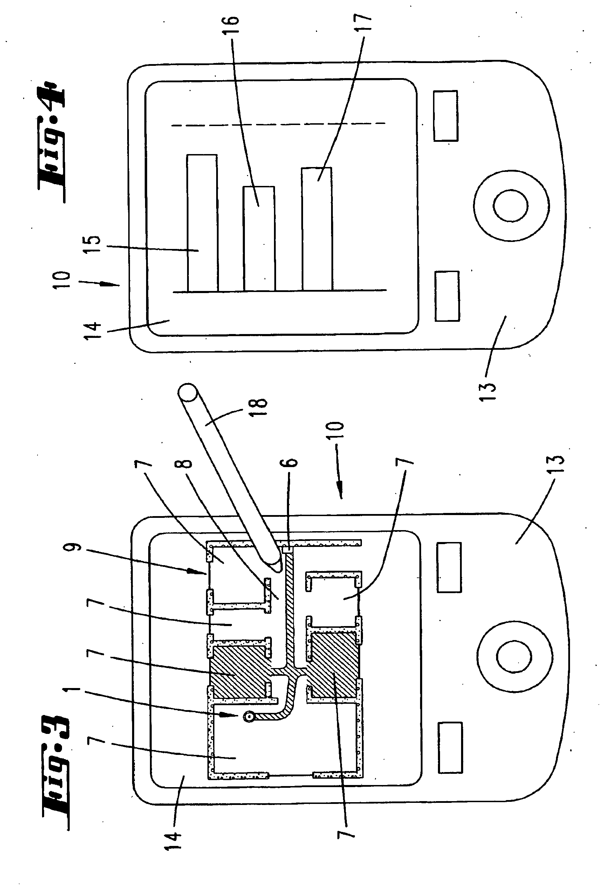

Auf dem Bildschirm 14 des Außengerätes 10 wird gemäß der Darstellung in Fig. 3 die in dem Roboter 1 abgelegte Karte 9 zufolge entsprechender Übertragung dargestellt, weiter auch die momentane Position des Roboters 1 innerhalb der Karte 9. Dies dient in erster Linie der Information für den Benutzer, in welchem Raum sich der Roboter 1 momentan aufhält.

Wie weiter in Fig. 3 dargestellt, übermittelt der Roboter 1 zudem auch die zunächst im Roboter 1 in Form von Daten gespeicherten gefahrenen und gereinigten Flächen in Bezug auf die gespeicherte Karte 9. In Fig. 3 sind diese bereits im Zuge des laufenden Reinigungsvorganges abgereinigten Flächen schraffiert dargestellt. Entsprechend ist der Benutzer über das Außengerät 10 darüber informiert, welche Flächen bereits gereinigt wurden und weiter in welchem Raum der Roboter 1 derzeit seinen Reinigungsvorgang fortsetzt.

Alternativ oder auch kombinativ (bevorzugt nach entsprechender Befehlsauslösung über das Außengerät 10) zeigt der Roboter 1 einen Reinigungsplan an, zur Information darüber, in welcher Reihenfolge ggf. in welchen zeitlichen Abständen weitere Räume im Rahmen des laufenden Reinigungsvorganges abgereinigt werden.

Weiter liefert der Roboter 1 in bevorzugter Ausgestaltung gemäß Fig. 4 Statusinformationen, wie bspw. in Form von Balkendiagrammen die seit einem letzten Reset abgelaufenen Betriebsstunden 15, den Ladezustand 16 des roboterseitigen Akkumulators, sowie weiter den Füllstand 17 des roboterseitigen Schmutzbehälters.

Zufolge der Ausgestaltung des Bildschirmes 14 als Touch-Screen ist über diesen direkt mittels Fingertouch oder indirekt mittels eines Touchpens 18 eine Befehlsauslösung erreichbar. So ist bspw. vorgesehen, dass durch entsprechendes Antippen eines kartenmäßig dargestellten Raumes auf dem Bildschirm 14 der Roboter 1 veranlasst wird, diesen unmittelbar oder alternativ nach Beendigung des aktuell durchgeführten Reinigungsvorganges des Raumes, in dem sich der Roboter 1 gerade befindet, anzufahren und diesen abzureinigen. Dies kann weiter bspw. auch dadurch erfolgen, dass mittels eines Touchpens 18 in üblicher Handhabungsweise bei Computern oder dergleichen durch Drücken auf das Robotersymbol auf dem Bildschirm und durch Halten desselben sowie Ziehen des Symbols in einen anderen Raum dieser Befehl ausgelöst wird.

Auch ist hierdurch ermöglicht, bspw. Flächen, die nicht gereinigt werden sollen, auszuschließen, so bspw. durch eine kreuzartige Bewegung des Touchpens 18 innerhalb eines auf dem Bildschirm 14 als Kartenausschnitt dargestellten Raumes. In diesem Zusammenhang erweisen sich, bei entsprechender Software-Auslegung, sogenannte Freihandsymbole als vorteilhaft.

Zudem kann über entsprechende Eingabe mittels eines Touchpens 18 auf dem Bildschirm 14 dem Roboter 1 ein Verfahrweg vorgegeben werden, weiter auch eine Reihenfolge der abzureinigenden Räume.

Zudem ist über das Außengerät 10 insbesondere bei einer Ausgestaltung mit Touch-Screen und Touchpen 18 die Erstellung einer Karte 9 bzw. die Überarbeitung einer Karte 9 ermöglicht, dies in einfachster Weise durch Zeichnen der Karte auf dem Bildschirm 14 bzw. Überarbeitung derselben.

Die eingegebenen Daten (X- und Y-Koordinaten oder Befehlsdaten) werden bevorzugt in Echtzeit an den Roboter 1 übermittelt, alternativ ausgelöst durch Benutzereingriff (bspw. Drücken einer OK-Taste). Zufolge bidirektionaler Kommunikation ist der Roboter 1 auch in der Lage, den Empfang eines solchen Datensatzes in Form einer Rückantwort an das Außengerät 10 zu bestätigen.

Das Außengerät 10 weist weiter bevorzugt eine Tastatur auf. Diese kann in üblicher Weise unterhalb des Bildschirmes 14 vorgesehen sein, alternativ aber auch lediglich in Form einer Anzeige auf dem Bildschirm 14 angeboten werden. Über die Tastatur bzw. Touch-Screen-Tastatur ist bspw. eine Zeitprogrammierung des Roboters 1 ermöglicht, so bspw. die Festlegung, zu welchem Zeitpunkt (ggf. sich wiederholendem Zeitpunkt) der Roboter 1 seine Arbeit aufnehmen soll und/oder welche Räume, ggf. mit unterschiedlicher Intensität, wann abgereinigt werden sollen.

### Bezugszeichenliste

- 1: Roboter
- 2: Chassis
- 3: Verfahrräder
- 4: Gerätehaube
- 5: Sensormittel
- 6: Basisstation
- 7: Raum
- 8: Flur
- 9: Karte
- 10: Außengerät
- 11: Notebook
- 12: Mobiltelefon
- 13: PDA
- 14: Bildschirm
- 15: Betriebsstunden
- 16: Ladezustand
- 17: Füllstand
- 18: Touchpen

## Patentansprüche

1. Verfahren zur Steuerung eines Roboters (1), vorzugsweise eines selbsttätig verfahrbaren Kehr- und/oder Saugroboters, wobei in dem Roboter (1) eine Karte (9) der Umgebung bzw. eines vorgegebenen Verfahrweges erstellt und abgespeichert wird, wobei weiter ein Außengerät (10) zur Steuerung auf den Roboter (1) einwirkt, die Karte (9) außerhalb des Roboters (1) auf das Außengerät (10) übertragen wird und die Position des Roboters (1) innerhalb der Karte (9) angezeigt wird, wobei eine Karte (9) der Umgebung auf dem Außengerät (10) erstellt wird und die so erstellte Karte (9) an den Roboter (1) übertragen wird, **dadurch gekennzeichnet, dass** das Außengerät (10) die Karte (9) zufolge Abscannen durch Entfernungsmessungen von Räumlichkeiten mittels des Außengerätes (10) erstellt und/oder eine bereits erstellte und in dem Roboter (1) abgelegte Karte (9) mittels des Außengerätes (10) überarbeitet wird, derart, dass eine von dem Roboter (1) an das Außengerät (10) übermittelte Karte (9) zufolge Benutzereingriff mittels des Außengerätes (10) durch Hinzunahme weiterer Räumlichkeiten und/oder durch Änderung einer oder mehrerer Raumabmessungen aktualisiert wird.

2. Verfahren nach Anspruch 1, **dadurch gekennzeichnet, dass** das Außengerät (10) einen Bildschirm (14) zur Anzeige der Karte (9) aufweist.

3. Verfahren nach einem der vorhergehenden Ansprüche, **dadurch gekennzeichnet, dass** die Betriebsstunden (15) und/oder die gefahrene, gereinigte Fläche in Bezug auf die gespeicherte Karte (9) in dem Roboter (1) in Form von Daten gespeichert werden und dass die modifizierte Kartendarstellung auf das Außengerät (10) übertragbar und dort anzeigbar ist.

4. Verfahren nach einem der vorhergehenden Ansprüche, **dadurch gekennzeichnet, dass** mittels des Außengerätes (10) der Roboter (1) hinsichtlich seines Verfahrweges und/oder Reinigungsablaufes gesteuert werden kann.

5. Verfahren nach einem der vorhergehenden Ansprüche, **dadurch gekennzeichnet, dass** das Außengerät (10) tragbar ist.

6. Verfahren nach einem der vorhergehenden Ansprüche, **dadurch gekennzeichnet, dass** das Außengerät (10) ein Telefon oder ein Computer oder ein Audioabspielgerät ist.

7. Verfahren nach einem der Ansprüche 2 bis 6, **dadurch gekennzeichnet, dass** die Anzeige des Außengerätes (10) als Touch-Screen ausgebildet ist.

8. Verfahren nach einem der vorhergehenden Ansprüche, **dadurch gekennzeichnet, dass** die Datenübertragung drahtlos erfolgt.

9. Verfahren nach einem der vorhergehenden Ansprüche, **dadurch gekennzeichnet, dass** die Datenübertragung mittels WLAN oder WPAN erfolgt.

## Claims

1. Method for controlling a robot (1), preferably a self-moving sweeping and/or vacuum robot, a map (9) of the environment or of a predetermined travel path being created and stored in the robot (1), an external device (10) further influencing the robot (1) to control said robot, the map (9) being transmitted outside the robot (1) to the external device (10), and the position of the robot (1) within the map (9) being displayed, a map (9) of the environment being created on the external device (10), and the thus created map (9) being transmitted to the robot (1), **characterised in that** the external device (10) creates the map (9) according to a scan by means of distance measurements of rooms by the external device (10), and/or an already created map (9) stored in the robot (1) is revised by means of the external device (10), such that a map (9) transmitted to the external device (10) from the robot (1) is updated according to a user intervention by means of the external device (10) by adding additional rooms and/or by changing one or more spatial dimensions.

2. Method according to claim 1, **characterised in that** the external device (10) has a screen (14) for displaying the map (9).

3. Method according to any of the preceding claims, **characterised in that** the operating hours (15) and/or the travelled, cleaned area with respect to the stored map (9) is/are stored in the robot (1) in the form of data, and **in that** the modified map appearance can be transmitted to the external device (10) and displayed thereon.

4. Method according to any of the preceding claims, **characterised in that** by means of the external device (10), the robot (1) can be controlled in terms of the travel path and/or cleaning process thereof.

5. Method according to any of the preceding claims, **characterised in that** the external device (10) is portable.

6. Method according to any of the preceding claims, **characterised in that** the external device (10) is a telephone, a computer or an audio-playing device.

7. Method according to any of claims 2 to 6, **characterised in that** the display of the external device (10) is designed as a touch screen.

8. Method according to any of the preceding claims, **characterised in that** the data transmission is wireless.

9. Method according to any of the preceding claims, **characterised in that** the data transmission is by WLAN or WPAN.

## Revendications

1. Procédé de commande d'un robot (1), de préférence d'un robot balayeur et/ou aspirateur pouvant se déplacer de façon autonome, dans lequel une carte (9) de l'environnement ou d'un trajet prédéfini est établie et enregistrée dans le robot (1), dans lequel en outre un appareil extérieur (10) agit sur le robot (1) à des fins de commande, la carte (9) est transférée en dehors du robot (1) à l'appareil extérieur (10) et la position du robot (1) est affichée sur la carte (9), dans lequel une carte (9) de l'environnement est établie par l'appareil extérieur (10) et la carte ainsi établie est transférée au robot (1), **caractérisé en ce que** l'appareil extérieur (10) établit la carte (9) après balayage grâce à des mesures de distance de pièces au moyen de l'appareil extérieur (10) et/ou une carte (9) déjà établie et stockée dans le robot (1) est révisée au moyen de l'appareil extérieur (10) de manière qu'une carte (9) transmise par le robot (1) à l'appareil extérieur (10) soit, après intervention de l'utilisateur, actualisée au moyen de l'appareil extérieur (10) par ajout de pièces supplémentaires et/ou par modification d'une ou plusieurs dimensions de pièce.

2. Procédé selon la revendication 1, **caractérisé en ce que** l'appareil extérieur (10) présente un écran (14) pour afficher la carte (9).

3. Procédé selon l'une des revendications précédentes, **caractérisé en ce que** les heures de fonctionnement (15) et/ou la surface nettoyée parcourue par rapport à la carte (9) enregistrée sont enregistrées dans le robot (1) sous forme de données et **en ce que** la représentation modifiée de la carte peut être transférée à l'appareil extérieur (10) pour y être affichée.

4. Procédé selon l'une des revendications précédentes, **caractérisé en ce que** le robot (1) peut être commandé en ce qui concerne son trajet et/ou son parcours de nettoyage au moyen de l'appareil extérieur (10).

5. Procédé selon l'une des revendications précédentes, **caractérisé en ce que** l'appareil extérieur (10) est portable.

6. Procédé selon l'une des revendications précédentes, **caractérisé en ce que** l'appareil extérieur (10) est un téléphone ou un ordinateur ou un appareil de lecture audio.

7. Procédé selon l'une des revendications 2 à 6, **caractérisé en ce que** l'affichage de l'appareil extérieur (10) est conçu en tant qu'écran tactile.

8. Procédé selon l'une des revendications précédentes, **caractérisé en ce que** le transfert de données s'effectue sans fil.

9. Procédé selon l'une des revendications précédentes, **caractérisé en ce que** le transfert de données s'effectue via WLAN ou WPAN.
